# EUROPEAN PATENT SPECIFICATION

(11) **EP 0 936 244 B1**
(45) Date of publication and mention of the grant of the patent: **18.08.2004**
(21) Application number: 99300966.1
(22) Date of filing: 10.02.1999
(51) Int. Cl.: C08K 13/02, C08K 5/51, C08L 69/00, C08L 101/00

(54) **Flame retardant carbonate polymer composition**
Flammhemmende Polycarbonatabmischung
Composition de polycarbonate ignifugée

(30) Priority: 13.02.1998 US 23926
(43) Date of publication of application: 18.08.1999
(73) Proprietor: GENERAL ELECTRIC COMPANY, Schenectady, NY 12345 (US)
(72) Inventor: Campbell, John Robert, Clifton Park, New York 12065 (US); Resue, James Alan, Scotia, New York 12302 (US); Rodgers, Patrick A., Selkirk, New York 12158 (US); Wroczynski, Ronald James, Schenectady, New York 12303 (US)
(74) Representative: Szary, Anne Catherine, Dr.

(56) References cited:
- EP-A- 0 363 608
- EP-A- 0 909 790
- WO-A-94/11429
- WO-A-96/27637
- DE-A- 4 418 080
- DE-A- 19 734 661
- DATABASE WPI Section Ch, Week 199434 Derwent Publications Ltd., London, GB; Class A23, AN 1994-275981 XP002144663 & JP 06 207092 A (TEIJIN KASEI LTD), 26 July 1994 (1994-07-26)

## Description

This invention relates to a flame retardant polymer composition having improved hydrolytic stability.

The use of organophosphorus flame retardants for imparting fireretarding properties to thermoplastic resins is known. For example, U.S. Patent No. 5,204,394 discloses thermoplastic resin compositions that contain an aromatic polycarbonate resin, a styrene-containing graft copolymer and an oligomeric organophosphorus flame retardant.

WO-A-94/11429 discloses a composition containing polycarbonate; polyester, an acrylate polymer, and /or a styrenic thermoplastic resin; poly(tetrafluoroethylene); an acid acceptor; and a halogenated aryl phosphate; and optionally a halogenated aromatic carbonate oligomer. The composition possesses a desirable balance of ignition resistance, impact. resistance and solvent resistance properties.

JP-A-6207092 discloses a resin composition which is excellent in flame retardancy and nonyellowing by mixing a polycarbonate resin with a specified titanium oxide, a specified silicon compound and a specified organophosphoric diester (alkali metal salt) in a specified ratio. The titanium oxide is produced by the chloride process and treated with a mixture of hydrated oxides of aluminum and silicon, and the organophosphoric diester is of formula 2 (wherein X is H or halogen) or the alkali metal salt of formula 3 wherein X is as defined above; and M is an alkali metal

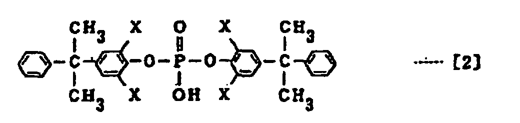

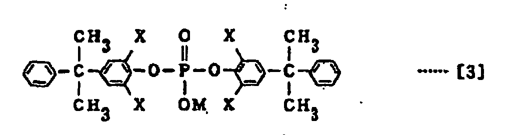

A thermoplastic resin composition that exhibits good flame retardant properties and that maintains an overall balance of physical properties under hydrolytic conditions is desired.

In a first aspect, the present invention is directed to a flame retardant thermoplastic resin composition, comprising:
(a) one or more thermoplastic resins, comprising at least one aromatic carbonate resin;
(b) a flame-retarding amount of an organophosphorus flame retardant compound comprising one or more compounds according to the structural formula: 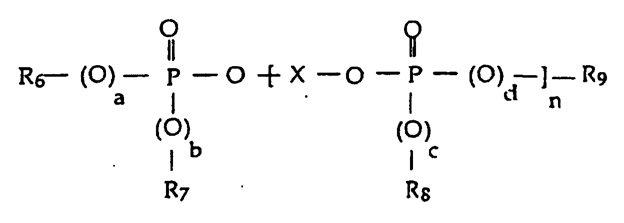 wherein R₆, R₇, R₈ and R₉ are each independently aryl, optionally substituted (C₁-C₆)alkyl,
   X is arylene, optionally substituted with (C₁-C₆)alkyl,
   a, b, c and d are each independently 0 or 1, and
   n is an integer from 1 to 5, and
(c) a basic metal oxide, in an amount from 10 to 1000 parts per million of the basic metal oxide, based on the combined amount of thermoplastic resins and organophosphorus compound effective to improve the hydrolytic stability of the composition, wherein the metal oxide is selected from the group consisting of inorganic oxides whose aqueous solutions or suspensions have a pH of greater than 9 and mixtures thereof.

In a second aspect, the present invention is directed to a process for making a flame retardant thermoplastic resin composition, comprising: combining one or more thermoplastic resins, said one or more thermoplastic resins comprising at least one aromatic carbonate resin, a flame-retarding amount of an organophosphorus flame retardant compounds as defined above and an amount of a basic metal oxide effective to improve the hydrolytic stability of the composition as defined above.

The thermoplastic resin composition of the present invention exhibits improved hydrolytic stability. As used herein, the terminology "hydrolytic stability" means a tendency of the composition not to undergo a change in molecular weight of the thermoplastic resin components of the composition, particularly the polycarbonate resin, when the resin composition is exposed to hydrolytic conditions. The terminology "hydrolytic conditions" means conditions that favor hydrolysis of any acids and any acid generating impurities present. Hydrolytic conditions include, for example, conditions under which the composition is exposed to moisture, typically, in the form of ambient elevated humidity, such as for example, a relative humidity of greater than about 50%. Hydrolytic conditions become more severe with increasing temperature and humidity and the hydrolytic stability of the composition of the present invention may be predicted on the basis of accelerated aging tests conducted at elevated heat and humidity, such as, for example, 100°C and 100% relative humidity.

### DETAILED DESCRIPTION OF THE INVENTION

In a preferred embodiment, the composition of the present invention comprises from 75 to 98 parts by weight ("pbw"), more preferably from 80 to 95 pbw and even more preferably from 85 to 92 pbw, of the one or more thermoplastic resins, from 2 to 25 pbw, more preferablv from 5 to 20 pbw and even more preferably from 8 to 15 pbw, of the organophosphorus compound, each based on 100 pbw of the combined amount of thermoplastic resin and organophosphorus compound, and from 10 to 1000 parts per million ("ppm"), more preferably from 50 to 700 ppm and even more preferably from 100 to 600 ppm of the basic metal oxide, based on the combined amount of thermoplastic resin and organophosphorus compound.

Suitable aromatic carbonate resins include aromatic polycarbonate resins or aromatic copolyester-carbonate resins.

Aromatic polycarbonate resins are known compounds and the properties and methods of making polycarbonate resins are also known. Typically these are prepared by reacting a dihydric phenol with a carbonate precursor, such as phosgene, a haloformate or a carbonate ester and generally in the presence of an acid acceptor and a molecular weight regulator. Generally speaking, such carbonate polymers may be typified as possessing recurring structural units of the formula (I): 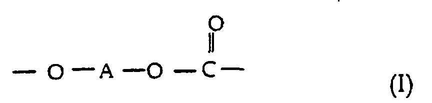 wherein A is a divalent aromatic radical of the dihydric phenol employed in the polymer reaction. The dihydric phenol which may be employed to provide such aromatic carbonate polymers are mononuclear or polynuclear aromatic compounds, containing as functional groups two hydroxy radicals, each of which maybe attached directly to a carbon atom of an aromatic nucleus. Typical dihydric phenols are: 2,2-bis(4-hydroxyphenyl) propane; hydroquinone; resorcinol; 2,2-bis(4-hydroxyphenyl) pentane; 2,4'-(dihydroxydiphenyl) methane; bis(2-hydroxyphenyl) methane; bis(4-hydroxyphenyl) methane;1,1-bis(4-hydroxyphenyl)-3,3,5-trimethylcyclohexane; fluorenone bisphenol, 1,1-bis(4-hydroxyphenyl) ethane; 3,3-bis(4-hydroxyphenyl) pentane; 2,2'-dihydroxydiphenyl; 2,6-dihydroxynaphthalene; bis(4-hydroxydiphenyl)sulfone; bis(3,5-diethyl-4-hydroxyphenyl)sulfone; 2,2-bis(3,5-dibromo-4-hydroxyphenyl)propane; 2,2-bis(3,5-dimethy-4-hydroxyphenyl)propane; 2,4'-dihydroxydiphenyl sulfone; 5'-chloro-2,4'-dihydroxydiphenyl sulfone; 4,4'-dihydroxydiphenyl ether; 4,4'-dihydroxy-3,3'-dichlorodiphenyl ether, spiro biindane bis phenol, and the like.

These aromatic polycarbonates can be manufactured by known processes, such as, for example and as mentioned above, by reacting a dihydric phenol with a carbonate precursor, such as phosgene, in accordance with methods set forth in the literature including the melt polymerization process. Generally in the melt polymerization process, a diphenyl carbonate is reacted with a bisphenol.

The carbonate precursor employed in preparing the polycarbonate of this invention can be either carbonyl halide or a haloformate. The carbonyl halides which can be employed herein are, for example carbonyl bromide, carbonyl chloride, etc.; or mixtures thereof. The haloformates suitable for use herein include bishaloformates of dihydric phenols (bischloroformates of bis phenol A, hydroquinone, etc.) or glycols (bishaloformates of ethylene glycol, neopentyl glycol, polyethylene glycol, etc.). While other carbonate precursors will occur to those skilled in the art, carbonyl chloride, also known as phosgene is preferred.

The reaction disclosed above is preferably known as an interfacial reaction between the dihydric compound and a carbonyl chloride such as phosgene. Another process for preparing the aromatic polycarbonate employed in this invention is the transesterification process which involves the transesterification of an aromatic dihydroxy compound and a diester carbonate. This process is known as the melt polymerization process. In the practice of this invention, the process of producing the aromatic polycarbonate is not critical. As used herein, aromatic carbonate polymer shall mean and include any of the aromatic polycarbonates, blends thereof with other polymer, copolymers thereof, copolyester carbonates, and mixtures thereof.

It is also possible to employ two or more different dihydric phenols or a copolymer of a dihydric phenol with a glycol or with a hydroxy- or acid-terminated polyester or with a dibasic acid or hydroxy acid in the event a carbonate copolymer or interpolymer rather than a homopolymer is desired for use in the preparation of the polycarbonate mixtures of the invention. Polyarylates and polyester-carbonate resins or their blends can also be employed. Branched polycarbonates are also useful and are well disclosed in the literature. Also, blends of linear polycarbonate and a branched polycarbonate can be utilized herein. Moreover, blends of any of the above materials may be employed in the practice of this invention to provide the aromatic polycarbonate component of the carbonate polymer composition.

In any event, the preferred aromatic polycarbonate for use in the practice in the present invention is a homopolymer, for example, a homopolymer derived from 2,2-bis(4-hydroxyphenyl)propane (bisphenol-A) and phosgene, commercially available.

The aromatic carbonate polymers also suitable for use in this invention include polyester-carbonates, also known as copolyester-polycarbonates, that is, resins which contain, in addition to recurring polycarbonate chain units of the formula (II): 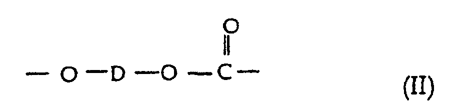 wherein D is a divalent aromatic radical of the dihydric phenol employed in the polymerization reaction, repeating or recurring carboxylate units, for example of the formula (III): 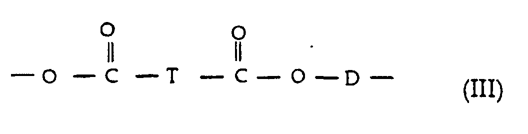 wherein D is a defined above and T is an aromatic radical such as phenylene, naphthylene, biphenylene, substituted phenylene and the like; a divalent alipathic-aromatic hydrocarbon radical such as an alkaryl or alkaryl radical; or two or more aromatic groups connected through such aromatic linkages which are known in the art.

The copolyester-polycarbonate resins are also prepared by interfacial polymerization technique, well known to those skilled in the art (see for example U.S. Patent 3,169,121 and 4,487,896).

In general, any dicarboxylic acid conventionally used in the preparation of linear polyesters may be utilized in the preparation of the copolyester carbonate resins of the instant invention. Generally, the dicarboxylic acids which may be utilized include the aliphatic dicarboxylic acids, the aromatic dicarboxylic acids, and the alipaticaromatic dicarboxylic acids. These acids are well known and are disclosed for example in U.S. Patent 3,169,121 which is hereby incorporated herein by reference. Mixtures of dicarboxylic acids may be employed. Therefore, where the term dicarboxylic acid is used herein it is to be understood that this term includes mixtures of two or more dicarboxylic acids.

Most preferred as aromatic dicarboxylic acids are isophthalic acid, terephthalic acids, and mixtures thereof. A particularly useful difunctional carboxylic acid comprises a mixture of isophthalic acid and terephthalic acid wherein the weight ratio of terephthalic acid to isophthalic acid is in the range of from about 10:1 to about 0.2:9:8.

Rather than utilizing the dicarboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example instead of using isophthalic acid, terephthalic acid or mixtures thereof, it is possible to employ isophthaloyl dichloride, terephthaloyl dichloride, and mixtures thereof.

The aromatic polycarbonate resins may be linear or branched and, generally, will have a weight average molecular weight of from about 10,000 to about 200,000 grams per mole ("g/mol"), preferably from about 20,000 to about 100,000 g/mol, as measured by gel permeation chromatography. Such resins typically exhibit an intrinsic viscosity, as determined in chloroform at 25°C of from about 0.3 to about 1.5 deciliters per gram (dl/ gm), preferably from about 0.45 to about 1.0 dl/gm.

The branched polycarbonates may be prepared by adding a branching agent during polymerization. These branching agents are well known and may comprise polyfunctional organic compounds containing at least three functional groups which may be hydroxyl, carboxyl, carboxylic anhydride, haloformyl and mixtures thereof. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene),tris-phenol PA (4(4(1,1-bis(p-hydroxyphenyl)-ethyl)alpha, alpha-dimethyl benzyl)phenol), 4-chloroformyl phthalic anhydride, trimesic acid and benzophenone tetracarboxylic acid. The branching agent may be added at a level of about 0.05-2.0 weight percent.

All types of polycarbonates end groups are contemplated as being within the scope of the present invention with respect to the polycarbonate component of a carbonate polymer composition.

The thermoplastic resin component of the composition of the present invention may, optionally, further comprise one or more other thermoplastic resins in addition to the aromatic carbonate resin, such as, for example, polyphenylene ether resins, vinyl aromatic graft copolymers resins, styrenic resins, polyester resins, polyamide resins, polyesteramide resins, polysulfone resins, polyimide resins, polyetherimide resins.

In a preferred embodiment, the composition of the present invention comprises an aromatic polycarbonate resin and a vinyl aromatic graft copolymer.

In a preferred embodiment, the thermoplastic resin component of the composition of the present invention comprises, based on 100 pbw of the thermoplastic resin component, from 30 to 99 pbw, more preferably from 50 to 95 pbw and still more preferably from 60 to 90 pbw of an aromatic polycarbonate resin and from 1 to 70 pbw, more preferably from 50 to 95 pbw and still more preferably from 10 to 40 pbw of a vinyl aromatic graft copolymer.

Suitable vinyl aromatic graft copolymers comprise (i) a rubber modified monovinylidene aromatic graft copolymer component and (ii) an ungrafted rigid copolymer component, and are generally prepared by graft polymerization of a mixture of a monovinylidene aromatic monomer and one or more comonomers in the presence of one or more rubbery polymeric substrates. Depending on the amount of rubber present, a separate matrix or continuous rigid phase of ungrafted rigid (co)polymer may be simultaneously obtained along with the rubber modified monovinylidene aromatic graft polymer. The resins may also be produced by blending a rigid monovinylidene aromatic copolymer with one or more rubber modified monovinylidene aromatic graft copolymers. Typically, the rubber modified resins comprise the rubber modified graft copolymer at a level of from 5 to 100 percent by weight ("wt%") based on the total weight of the resin, preferably from 10 to 90 wt% thereof, and more preferably 30 to 80 wt% thereof. The rubber modified resin comprises the ungrafted rigid polymer at a level of from 95 to 0 wt% based on the total weight of the resin, preferably from 90 to 10 wt% thereof, and more preferably from 70 to 20 wt% thereof.

Monovinylidene aromatic monomers which may be employed include styrene, α-methyl styrene, halostyrenes, that is, dibromostyrene, mono or di alkyl, alkoxy or hydroxy substitute groups on the nuclear ring of the monovinylidene aromatic monomer, that is, vinyl toluene, vinylxylene, butylstyrene, parahydroxystyrene or methoxystyrene or mixtures thereof. The monovinylidene aromatic monomers utilized are generically described by the following formula (IV): 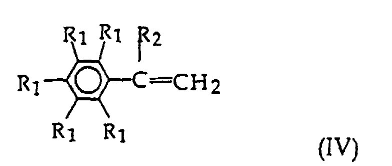 wherein each R₁ is independently H, (C₁-C₆)alkyl, cycloalkyl, aryl, alkaryl, aralkyl, alkoxy, aryloxy, or halo, such as, for example, such as bromine and chlorine, and R₂ is selected from the group consisting of H, (C₁-C₆)alkyl and halo. As used herein, the notation "(Cₓ-C_{y})" in reference to an organic moiety means that the organic moiety contains from x carbons to y carbons. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, mixtures thereof and the like. The preferred monovinylidene aromatic monomers used are styrene and/or α-methylstyrene.

Comonomers which may be used with the monovinylidene aromatic monomer includes acrylonitrile, methacrylonitrile, (C₁-C₈)alkyl or aryl substituted acrylate, (C₁-C₈)alkyl, aryl or haloaryl substituted methacrylate, acrylic acid, methacrylic acid, itaconic acid, acrylamide, N-substituted acrylamide or methacrylamide, maleic anhydride, maleimide, N-alkyl, aryl or haloaryl substituted maleimide, glycidyl (meth)acrylates, hydroxy alkyl (meth)acrylates or mixtures thereof. The acrylonitrile, substituted acrylonitrile, or acrylic acid esters are described generically by the following formula (V): 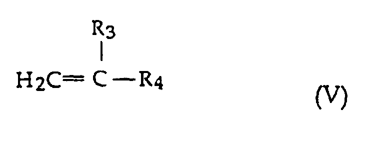 wherein R₃ is H or C₁-C₆)alkyl and R₄ is selected from the group consisting of cyano and (C₁-C₁₆)alkoxycarbonyl. Examples of such monomers include acrylonitrile, ethacrylonitrile, methacrylonitrile, α-chloroacrylonitrile, α-bromoacrylonitrile, methyl acrylate, methyl methacrvlate, ethyl acrylate, butyl acrylate, propyl acrylate, isopropyl acrylate and mixtures thereof. The preferred monomer is acrylonitrile and the preferred acrylic acid esters are ethyl acrylate and methyl methacrylate. It is also preferred that the acrylic acid esters, when included, are employed in combination with styrene or acrylonitrile.

The rubber modified graft copolymer preferably comprises (i) the rubber substrate, and (ii) a rigid polymeric superstrate portion grafted to the rubber substrate. The rubber substrate is preferably present in the graft copolymer at a level of from 5 to 80 wt% based on the total weight of the graft copolymer, more preferably from 10 to 70 wt% thereof. The rigid superstrate is preferably present at a level of from 95 to 20 wt% based on the total weight of the graft copolymer, and more preferably from 90 to 30 wt% thereof.

Examples of rubbery polymers for the substrate include: conjugated dienes, copolymers of a diene with styrene, acrylonitrile, methacrylonitrile or (C₁-C₈)alkyl acrylate which contain at least 50% (preferably at least 65% by weight) conjugated dienes, polyisoprene or mixtures thereof; olefin rubbers, that is, ethylene propylene copolymers (EPR) or ethylene propylene nonconjugated diene copolymers (EPDM); silicone rubbers; or (C₁-C₈)alkyl acrylate homopolymers or copolymers with butadiene and/or styrene. The acrylic polymer may also contain up to 5%. of one or more polyfunctional crosslinking agents such as alkylenediol di(meth)acrylates, alkylenetriol tri (meth) acrylates, polyester di(meth)acrylates, divinylbenzene, trivinylbenzene, butadiene, isoprene and optionally graftable monomers such as, triallyl cyanurate, triallyl isocyanurate, allyl (meth)acrylate, diallyl maleate, diallyl fumarate, diallyl adipate, triallyl esters of citric acid or mixtures of these agents.

The diene rubbers may preferably be polybutadiene, polyisoprene and copolymers of butadiene with up to 35% by weight of (C₁-C₆)alkylacrylate which are produced by aqueous radical emulsion polymerization. The acrylate rubbers may be cross-linked, particulate emulsion copolymers substantially of (C₁-C₈)alkylacrylate, in particular (C₁-C₆)alkylacrylate, optionally in admixture with up to 15% by weight of comonomers such as styrene, methylmethacrylate, butadiene, vinyl methyl ether or acrylonitrile and optionally up to 5% by weight of a polyfunctional crosslinking comonomer, for example, divinylbenzene, glycolbis-acrylates, bisacrylamides, phosphoric acid triallylester, citric acid triallyl-ester, allylesters or acrylic acid or methacrylic acid, triallylcyanurate, triallylisocyanurate. Also suitable are mixtures of diene and alkylacrylate rubbers and rubbers which have a so-called core/shell structure, for example a core of diene rubber and a shell of acrylate or vice versa.

Specific conjugated diene monomers normally utilized in preparing the rubber substrate of the graft polymer are generically described by the following formula (VI): 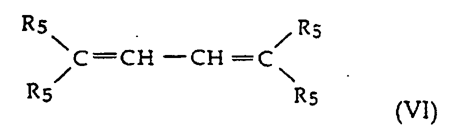 wherein each R₅ is independently H, (C₁-C₆)alkyl, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

The substrate polymer, as mentioned, is preferably a conjugated diene polymer such as polybutadiene, polyisoprene, or a copolymer, such as butadiene-styrene, butadiene-acrylonitrile, or the like. The rubbery polymeric substrate portion must exhibit a glass transition temperature (Tg) of less than about 0°C.

Mixtures of one or more rubbery polymers previously described for preparing the monovinylidene aromatic graft polymers, or mixtures of one or more rubber modified monovinylidene aromatic graft polymers disclosed herein may also be employed. Furthermore, the rubber may comprise either a block or random copolymer. The rubber particle size used in this invention as measured by simple light transmission methods or capillary hydrodynamic chromatography (CHDF) may be described as having an average particle size by weight of 0.05 to 1.2 microns, preferably 0.2 to 0.8 microns, for emulsion based polymerized rubber latices or 0.5 to 10 microns, preferably 0.6 to 1.5 microns, for mass polymerized rubber substrates which also have included grafted monomer occulsions. The rubber substrate is preferably a particulate, moderately cross-linked diene or alkyl acrylate rubber, and preferably has a gel content greater than 70%.

Preferred graft superstrates include copolymers of styrene and acrylonitrile, copolymers of α-methylstyrene and acrylonitrile and methylmethacrylate polymers or copolymers with up to 50% by weight of (C₁-C₆)alkylacrylates, acrylonitrile or styrene. Specific examples of monovinylidene aromatic graft copolymers include but are not limited to the following: acrylonitrile-butadiene-styrene (ABS) , acrylonitrile-styrene-butyl acrylate (ASA), methylmethacrylate-acrylonitrile-butadiene styrene (MABS), acrylonitrile-ethylene-propylene-non-conjugated diene-styrene (AES).

The ungrafted rigid polymers (typically free of rubber) are resinous, thermoplastic polymers of styrene, α-methylstyrene, styrenes substituted in the nucleus such as para-methylstyrene, methyl acrylate, methylmethacrylate, acrylonitrile, methacrylonitrile, maleic acid anhydride, N-substituted maleimide, vinyl acetate or mixtures thereof. Styrene/ acrylonitrile copolymers, α-methylstyrene/ acrylonitrile copolymers and methylmethacrylate/acrylonitrile copolymers are preferred.

The ungrafted rigid copolymers are known and may be prepared by radical polymerization, in particular by emulsion, suspension, solution or bulk polymerization. They preferably have number average molecular weights of from 20,000 to 200,000 g/mol and limiting viscosity numbers [η] of from 20 to 110 ml/g (determined in dimethylformamide at 25°C).

The number average molecular weight of the grafted rigid superstrate of the monovinylidene aromatic resin is designed to be in the range of 20,000 to 350,000 g/mol. The ratio of monovinylidene aromatic monomer to the second and optionally third monomer may is range from 90/10 to 50/50 preferably 80/20 to 60/40. The third monomer may optional replace 0 to 50 percent of one or both of the first and second monomers.

These rubber modified monovinylidene aromatic graft polymers may be polymerized either by mass, emulsion, suspension, solution or combined processes such as bulk-suspension, emulsion-bulk, bulk-solution or other techniques well known in the art. Furthermore, these rubber modified monovinylidene aromatic graft copolymers may be produced either by continuous, semibatch or batch processes.

The organophosphorus compound comprises one or more compounds according to the structural formula (VII): 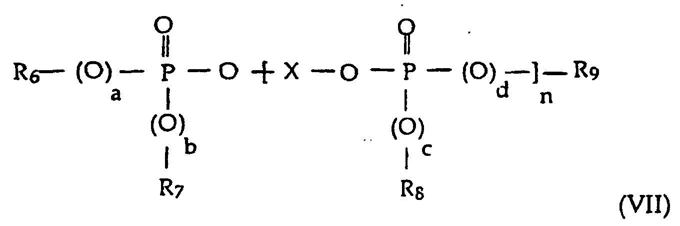 wherein R₆, R₇, R₈ and R₉ are each independently aryl, optionally substituted with halo or (C₁-C₆)alkyl,
X is arylene, optionally substituted with halo or (C₁-C₆)alkyl,
a, b, c and d are each independently 0 or 1, and
n is an integer from 0 to 5, more preferablv from 1 to 5.

As used herein, the term "aryl" means a monovalent radical containing one or more aromatic rings per radical, which may optionally be substituted on the one or more aromatic rings with one or more alkyl groups, each preferably (C₁-C₆)alkyl and which, in the case wherein the radical contains two or more rings, may be fused rings.

As used herein, the term "arylene" means a divalent radical containing one or more aromatic rings per radical, which may optionally be substituted on the one or more aromatic rings with one or more alkyl groups, each preferably (C₁-C₆)alkyl and which, in the case wherein the divalent radical contains two or more rings, the rings may be may be fused or may be joined by a non-aromatic linkages, such as for example, an alkylene, alkylidene, any of which may be substituted at one or more sites on the aromatic ring with a halo group or (C₁-C₆)alkyl group.

In a preferred embodiment, the organophosphorus compound comprises a blend of organophosphorus compound oligomers according to formula (VII), wherein n for each oligomer is an integer of from 1 to 5 and the blend has an average n value of greater than 1 to less than 5, more preferably greater than 1 to less than 3, even more preferably, greater than 1 to less than 2.

In highly preferred embodiment, the organophosphorus compound comprises one or more resorcinol diphosphate ("RDP") esters according to formula (VII), wherein R₆, R₇, R₈ and R₉ are each phenyl, a, b, c and d are each 1, X is 1,3-phenylene and n is an integer from 1 to 5.

More preferably, the organophosphorus compound comprises a blend of RDP oligomers, wherein n for each oligomer is an integer of from 1 to 5 and the blend has an average n value of greater than 1 to less than 5, more preferably from greater than 1 to less than 3, even more preferably, from greater than 1 to less than 2.

In a more highly preferred embodiment, the organophosphorus compound comprises one or more bisphenol A diphosphate ("BPA-DP") esters according to formula (VII), wherein R₆, R₇, R₈ and R₉ are each phenyl, a, b, c and d are each 1, and X is a divalent aromatic radical of the structural formula (VIII)): 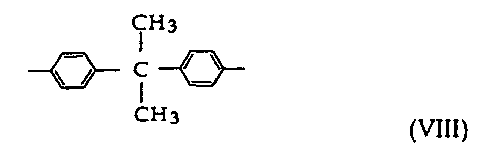 and n is an integer from 1 to 5.

More preferably, the organophosphorus compound comprises a blend of BPA-DP oligomers, wherein n for each oligomer is an integer of from 1 to 5 and the blend has an average n value of greater than 1 to less than 5, more preferably from greater than 1 to less than 3, and even more preferably, from greater than 1 to less than 2.

In another preferred embodiment, the organophosphorus compound component of the composition of the present invention comprises a mixture of from about 1 to about 99 wt% of one or more BPA-DP esters and about 1 to about 99 wt% of one or more RDP esters.

It has been found that acid species and/or acid precursors, which, under conditions of elevated heat and humidity, lead to the in-situ formation of acid species, are typically present as impurities in the above described organophosphorus compounds. Such impurities may result from such sources as, for example, catalyst residues, unreacted starting materials, such as, for example, phosphoryl halides or phosphoric acid derivatives, or from unstable phosphate esters of decomposition products. It has also been found that the use of an organophosphorus compound that has a high level of such acid species and/or such acid precursors as a flame retardant additive in a thermoplastic resin composition compromises the hydrolytic stability of the thermoplastic resin composition. These acid species may be titratable species and/or acid generating species that are not titratable but determinable by alternative analytical methods.. The lower the acid level of the organophosphorus flame retardant component of the thermoplastic resin composition of the present invention, the better the hydrolytic stability of the thermoplastic resin composition.

In a preferred embodiment, the organophosphorus compound exhibits an acid level that is neutralizable by a titration addition of less than the equivalent of about 1.0 milligrams ("mg"), more preferably from 0 to about 0.5 mg even more preferably from 0 to about 0.1 mg, of potassium hydroxide ("KOH") per gram of organophosphorus compound. The acid level of the organophosphorus compound is measured by dissolving a sample of the organophosphorus compound in isopropanol and then titrating the resultant solution with a 0.1 N aqueous solution of KOH to a bromophenol blue end point.

Metal oxides suitable as the basic metal oxide component of the present invention are those inorganic oxides whose aqueous solutions or suspensions have a pH of greater than 9. Suitable metal oxides include, for example, magnesium oxide, calcium oxide, barium oxide, strontium oxide, aluminum oxide and zinc oxide, as well as mixtures thereof. It is believed that the basic metal oxide is effective in neutralizing the residual acid impurities present in the organophosphorus compound component of the composition of the present invention, as well as acid species that may be generated in-situ from acid precursors that may be present as impurities in the organophosphorus compound, to thereby further reduce the acid content of the thermoplastic resin composition.

In a highly preferred embodiment, the metal oxide is magnesium oxide.

In a preferred embodiment, the composition of the present invention includes a fluoropolymer, in an amount, typically from 0.01 to 0.5 pbw fluoropolymer per 100 pbw of the thermoplastic resin composition, effective to provide anti-drip properties to the resin composition. Suitable fluoropolymers and methods for making such fluoropolymers are known, see, for example, U.S Patent Nos. 3,671,487, 3,723,373 and 3,383,092. Suitable fluoropolymers include homopolymers and copolymers that comprise structural units derived from one or more fluorinated olefin monomers. The term "fluorinated olefin monomer" means an olefin monomer that includes at least one fluorine atom substituent. Suitable fluorinated olefin monomers include, for example, fluoroethylenes such as, for example, CF₂=CF₂, CHF=CF₂, CH₂=CF₂, CH₂=CHF, CClF=CF₂, CCl₂=CF₂, CClF=CClF, CHF=CCl₂, CH₂=CClF, and CCl₂=CCIF and fluoropropylenes such as, for example, CF₃CF=CF₂, CF₃CF=CHF, CF₃CH=CF₂, CF₃CH=CH₂, CF₃CF=CHF, CHF₂CH=CHF and CF₃CH=CH₂. In a preferred embodiment, the fluorinated olefin monomer is one or more of tetrafluoroethylene (CF₂=CF₂), chlorotrichloroethylene (CClF=CF₂), vinylidene fluoride (CH₂=CF₂) and hexafluoropropylene (CF₂=CFCF₃).

Suitable fluorinated olefin homopolymers include for example, poly(tetra-fluoroethylene), poly(hexafluoroethylene).

Suitable fluorinated olefin copolymers include copolymers comprising structural units derived from two or more fluorinated olefin copolymers such as, for example, poly(tetrafluoroethylene-hexafluoroethylene), and copolymers comprising structural units derived from one or more fluorinated monomers and one or more non-fluorinated monoethylenically unsaturated monomers that are copolymerizable with the fluorinated monomers such as, for example, poly(tetrafluoroethylene-ethylene-propylene) copolymers. Suitable non-fluorinated monoethylenically unsaturated monomers include for example, olefin monomers such as, for example, ethylene, propylene butene, acrylate monomers such as for example, methyl methacrylate, butyl acrylate, vinyl ethers, such as, for example, cyclohexyl vinyl ether, ethyl vinyl ether, n-butyl vinyl ether, vinyl esters such as, for example, vinyl acetate, vinyl versatate.

In a preferred embodiment, the fluoropolymer particles range in size from 50 to 500 nm, as measured by electron microscopy.

In a highly preferred embodiment, the fluoropolymer is a poly(tetrafluoroethylene) homopolymer ("PTFE").

Since direct incorporation of a fluoropolymer into a thermoplastic resin composition tends to be difficult, it is preferred that the fluoropolymer be preblended in some manner with a second polymer such as for, example an aromatic polycarbonate resin or a styrene-acrylonitrile resin. Methods for making suitable pre-blends are known. For example, an aqueous dispersion of fluoropolymer and a polycarbonate resin may be steam precipitated to form a fluoropolymer concentrate for use as a drip inhibitor additive in thermoplastic resin composition, as disclosed in, for example, U.S. Patent No. 5,521,230 or, alternatively, an aqueous styrene-acrylonitrile resin emulsion or an aqueous acrylonitrile-butadiene-styrene resin emulsion and then precipitating and drying the co-coagulated fluoropolymer-thermoplastic resin composition to provide a PTFE-thermoplastic resin powder as disclosed in for example, U.S Patent No. 4,579,906.

In a preferred embodiment, the fluoropolymer additive comprises from 30 to 70 wt%, more preferably 40 to 60 wt%, of the fluoropolymer and from 30 to 70 wt%, more preferably 40 to 60 wt%, of the second polymer.

In a preferred embodiment, a fluoropolymer additive is made by emulsion polymerization of one or more monoethylenically unsaturated monomers in the presence of the aqueous fluoropolymer dispersion of the present invention to form a second polymer in the presence of the fluoropolymer. Suitable monoethylenically unsaturated monomers are disclosed above. The emulsion is then precipitated, for example, by addition of sulfuric acid. The precipitate is dewatered, for example, by centrifugation, and then dried to form a fluoropolymer additive that comprises fluoropolymer and an associated second polymer. The dry emulsion polymerized fluoropolymer additive is in the form of a free-flowing powder.

In a preferred embodiment, the monoethylenically unsaturated monomers that are emulsion polymerized to form the second polymer comprise one or more monomers selected from vinyl aromatic monomers, monoethylenically unsaturated nitrile monomer and (C₁-C₁₂)alkyl (meth)acrylate monomers. Suitable vinyl aromatic monomers, monoethylenically unsaturated nitrile monomer and (C₁-C₁₂)alkyl (meth)acrylate monomers are disclosed above.

In a highly preferred embodiment, the second polymer comprises structural units derived from styrene and acrylonitrile. More preferably, the second polymer comprises from 60 to 90 wt% structural units derived from styrene and from 10 to 40 wt% structural units derived from acrylonitrile.

The emulsion polymerization reaction mixture may optionally include emulsified or dispersed particles of a third polymer, such as, for example, an emulsified butadiene rubber latex.

The emulsion polymerization reaction is initiated using a conventional free radical initiator such as, for example, an organic peroxide compound, such as, for example, benzoyl peroxide, a persulfate compound, such as, for example, potassium persulfate, an azonitrile compound such as, for example, 2,2'-azobis-2,3,3-trimethylbutyronitrile, or a redox initiator system, such as, for example, a combination of cumene hydroperoxide, ferrous sulfate, tetrasodium pyrophosphate and a reducing sugar or sodium formaldehyde sulfoxylate.

A chain transfer agent such as, for example, a (C₉-C₁₃) alkyl mercaptan compound such as nonyl mercaptan, t-dodecyl mercaptan, may, optionally, be added to the reaction vessel during the polymerization reaction to reduce the molecular weight of the second polymer. In a preferred embodiment, no chain transfer agent is used.

In a preferred embodiment, the stabilized fluoropolymer dispersion is charged to a reaction vessel and heated with stirring. The initiator system and the one or more monoethylenically unsaturated monomers are then charged to the reaction vessel and heated to polymerize the monomers in the presence of the fluoropolymer particles of the dispersion to thereby form the second polymer.

Suitable fluoropolymer additives and emulsion polymerization methods are disclosed in EP 0 739 914 A1.

In a preferred embodiment, the second polymer exhibits a number average molecular weight of from 30,000 to 200,000 g/mol.

The thermoplastic resin composition of the present invention may optionally also contain various conventional additives, such as: antioxidants, such as, for example, organophosphites, for example, tris(nonyl-phenyl)phosphite, (2,4,6-tri-tert-butylphenyl)(2-butyl-2-ethyl-1,3-propanediol)phosphite, bis(2,4-di-t-butylphenyl)pentaerythritol diphosphite or distearyl pentaerythritol diphosphite, as well as alkylated monophenols, polyphenols, alkylated reaction products of polyphenols with dienes, such as, for example, butylated reaction products of para-cresol and dicyclopentadiene, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl)-propionic acid with monohydric or polyhydric alcohols, esters of beta-(5-tert-butyl-4-hydroxy-3-methylphenyl) propionic acid with mono-or polyhydric alcohols, esters of thioalkyl or thioaryl compounds, such as, for example, distearylthiopropionate, dilaurylthiopropionate, ditridecylthiodipropionate, amides of beta-(3,5-di-tert-butyl-4-hydroxyphenol)-propionic acid; UV absorbers and light stabilizers such as, for example, 2-(2'-hydroxyphenyl)-benzotriazoles, 2-Hydroxy-benzophenones; esters of substituted and unsubstituted benzoic acids, acrylates; fillers and reinforcing agents, such as, for example, silicates, TiO₂ glass fibers, carbon black, graphite, calcium carbonate, talc, mica; other additives such as, for example, lubricants such as, for example, pentaerythritol tetrastearate, EBS wax, silicone fluids, plasticizers, optical brighteners, pigments, dyes, colorants, flameproofing agents; anti-static agents; blowing agents, as well as other flame retarding agents in addition to the above described organophosphorus compounds.

### Examples 1 and 2 and Comparative examples C1 and C2

The compositions of Examples 1 and 2 of the present invention and of Comparative examples C1 and C2 were prepared in by combining the following components in the relative amounts set forth, in pbw, below in TABLE I.

| | |
|---|---|
| PC | A linear polycarbonate resin derived from bisphenol A and phosgene and having an intrinsic viscosity of 0.50 deciliters per grams. |
| ABS | Emulsion polymerized acrylonitrile-butadiene-styrene ("ABS") graft copolymer comprising 50 pbw of a discontinuous elastomeric phase (polybutadiene with an average particle size of about 300 nm) and 50 pbw of a rigid thermoplastic phase (copolymer of 75 pbw styrene and 25 pbw acrylonitrile). |
| SAN | Styrene-acrylonitrile copolymer (75 pbw styrene/25 pbw acrylonitrile) having a weight average molecular weight of about 90,000 g/mol. |
| RDP | Mixture of resorcinol diphosphate oligomers with an average degree of polymerization of n =1.13 and having an acid level of less than 0.1 mg KOH per gram (Fyroflex™ RDP from Akzo Nobel Chemicals) |
| BPA-DP | Mixture of bisphenol A diphosphate oligomers with an average degree of polymerization of n =1.08 and having an acid level of less than 0.1 mg KOH per gram. |
| MgO | Magnesium oxide. |
| TSAN: | Additive made by copolymerizing styrene and acrylonitrile in the presence of an aqueous dispersion of PTFE (50 wt% PTFE and 50 wt% of a copolymer of 75 wt% Styrene and 25 wt% acrylonitrile). |

The following general procedure was followed in preparing and testing the compositions of Examples 1 and 2 and Comparative Examples C1 and C2. Well mixed dry blends of the components of the compositions were prepared by intensively dispersing all blend components in a Henschel mixer. These dry blends were extruded on a laboratory twin screw extruders operating at typical flame retarded polycarbonate/ABS processing temperatures and conditions of about 250°C to about 300°C. Test specimens were molded on a 30 ton Engel injection molder with a nominal melt temperature of about 240°C (465°F).

ASTM type I tensile bar of each of the compositions were molded and tested. Hydrolytic stability was measured by exposing part of a tensile bar to 100°C and 100% relative humidity ("RH") for various periods of time ("t"). A part of the bar was then cut off and the polycarbonate weight average molecular weight ("M_{w}") was determined by gel permeation chromatography (GPC). All molecular weights are reported relative to mono-disperse polystyrene standards of known molecular weight.

The results of weight average molecular weight determination of specimens upon exposure to temperature and humidity for various times ("M_{w} (g/mol x 10⁻³) after aging at 100°C and 100% for residence time t (hr)"), are set forth in TABLE I for RDP-containing compositions of Comparative Example C1 and Example 1 and in TABLE II for the BPA-DP-containing compositions of Example 2 and Comparative Example 2.

**TABLE I**

| | C1 | 1 |
|---|---|---|
| PC | 70 | 70 |
| ABS | 9 | 9 |
| SAN | 8.3 | 8.3 |
| TSAN | 0.4 | 0.4 |
| Additives | 0.8 | 0.8 |
| RDP | 11.5 | 11.5 |
| MgO | 0 | 70 ppm |
| M_{w} (g/mol x 10⁻³) after aging at 100°C and 100% for residence time t (hr) | | |
| t = 0 | 52.6 | 51 |
| t = 3 | 49.4 | 51 |
| t = 6.5 | 47.1 | 52.7 |
| t = 9.5 | 43 | 50.9 |
| t = 14.5 | 40.6 | 47 |
| t = 18 | 35 | 45 |

Comparative Example C1 is analogous to Example 1, except that Comparative Example C1 lacks the MgO component of Example 1. The composition of Example 1 exhibited improved stability with respect to molecular weight, compared to the composition of Comparative Example C1, as indicated by the relative small change in the molecular weigh of Example 1 under the aging conditions.

**TABLE II**

| | C2 | 2 |
|---|---|---|
| PC | 67.7 | 67.7 |
| ABS | 9 | 9 |
| SAN | 8.3 | 8.3 |
| TSAN | 0.4 | 0.4 |
| Additives | 0.8 | 0.8 |
| BPA-DP | 13.8 | 13.8 |
| MgO | 0 | 480 ppm |
| M_{w} (g/mol x 10⁻³) after aging at 100°C and 100% for residence time t (hr) | | |
| t = 0 | 53.5 | 49 |
| t = 3 | 49.1 | 48.5 |
| t = 5.25 | 45 | 47.5 |
| t = 7.5 | 43.9 | 48 |
| t = 9.25 | 39.6 | 47.5 |
| t = 15 | 34.2 | 47 |
| t = 20 | 30.5 | 48 |

Comparative Example C2 is analogous to Example 2, except that Comparative Example C2 lacks the MgO component of Example 2. The composition of Example 2 exhibited improved stability with respect to molecular weight, compared to the composition of Comparative Example C2, as indicated by the relative small change in the molecular weigh of Example 1 under the aging conditions.

The thermoplastic resin composition of the present invention exhibits improved hydrolytic stability.

## Claims

1. A flame retardant thermoplastic resin composition, comprising:
(a) one or more thermoplastic resins, comprising at least one aromatic carbonate resin;
(b) a flame-retarding amount of an organophosphorus flame retardant compound comprising one or more compounds according to the structural formula: 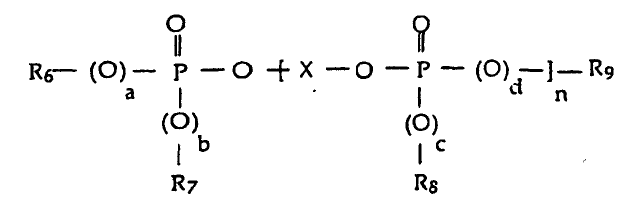 wherein R₆, R₇, R₈ and R₉ are each independently aryl, optionally substituted (C₁-C₆)alkyl,
X is arylene, optionally substituted with (C₁-C₆)alkyl,
a, b, c and d are each independently 0 or 1, and
n is an integer from 1 to 5, and
(c) a basic metal oxide, in an amount from 10 to 1000 parts per million of the basic metal oxide, based on the combined amount of thermoplastic resins and organophosphorus compound effective to improve the hydrolytic stability of the composition, wherein the metal oxide is selected from the group consisting of inorganic oxides whose aqueous solutions or suspensions have a pH of greater than 9 and mixtures thereof.

2. The composition of claim 1, wherein the aromatic carbonate resin comprises an aromatic polycarbonate resin or an aromatic poly(ester-carbonate) resin.

3. The composition of claim 2, wherein the one or more thermoplastic resins further comprise a vinyl aromatic graft copolymer.

4. The composition of claim 3, wherein the one or more thermoplastic resins comprise from about 30 to about 99 parts by weight of an aromatic polycarbonate resin and from 1 to about 70 parts by weight of acrylonitrile-butadiene-styrene graft copolymer, based on the 100 parts by weight of thermoplastic resins.

5. The composition of claim 1, wherein the composition comprises about 60 to about 90 parts by weight of the one or more thermoplastic resins and from about 40 to about 10 parts by weight of the organophosphorus compound, and from 10 to 1000 parts per million of the basic metal oxide, based on the combined amount of thermoplastic resins and organophosphorus compound.

6. The composition of claim 1, wherein R₆, R₇, R₈, and R₉ are each phenyl, a, b, c and d are each 1, and X is 1,3-phenylene or a divalent aromatic radical of the structural formula:

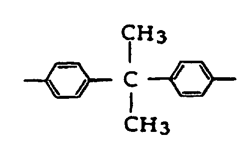

7. The composition of claim 1, wherein the organophosphorus compound has a titratable acid level of less than about 1.0 milligram of potassium hydroxide per gram of the organophosphorus compound.

8. The composition of claim 6, wherein the organophosphorus compound is a blend of organophosphorus compound oligomers having an average n value of greater than 1 to less than 5.

9. The composition of claim 1, wherein the metal oxide is selected from the group consisting of magnesium oxide, calcium oxide, barium oxide, strontium oxide, aluminum oxide, zinc oxide and mixtures thereof.

10. A process for making a flame retardant thermoplastic resin composition, comprising combining one or more thermoplastic resins, said one or more thermoplastic resins comprising at least one aromatic carbonate resin, a flame-retarding amount of an organophosphorus flame retardant compound comprising one or more compounds according to the structural formula: 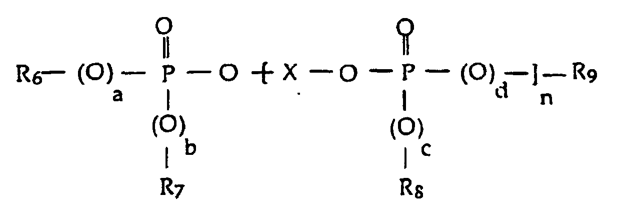 wherein R₆, R₇, R₈ and R₉ are each independently aryl, optionally substituted (C₁-C₆)alkyl, X is arylene, optionally substituted with (C₁-C₆)alkyl, a, b, c and d are each independently 0 or 1, n is an integer from 1 to 5, and an amount of from 10 to 1000 parts per million of the basic metal oxide, based on the combined amount of thermoplastic resins and organophosphorus compound of a basic metal oxide effective to improve the hydrolytic stability of the composition, wherein the metal oxide is selected from the group consisting of inorganic oxides whose aqueous solutions or suspensions have a pH of greater than 9 and mixtures thereof.

## Patentansprüche

1. Eine flammhemmende thermoplastische Harzzusammensetzung umfassend:
(a) ein oder mehrere thermoplastische Harze umfassend wenigstens ein aromatisches Carbonatharz;
(b) eine flammhemmende Menge einer flammhemmenden organischen Phosphorverbindung aufweisend eine oder mehrere Verbindungen gemäß der Strukturformel: 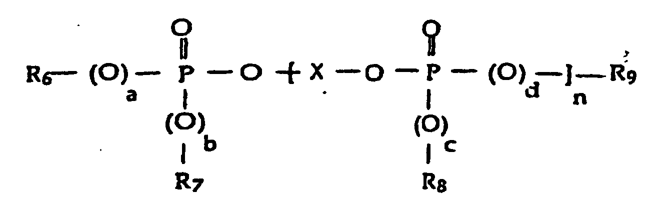 worin R₆, R₇, R₈ und R₉ jeweils unabhängig Aryl sind, gegebenenfalls substituiert (C₁-C₆)Alkyl,
X Arylen ist, das gegebenenfalls substituiert ist mit (C₁-C₆)Alkyl,
a, b, c und d jeweils unabhängig 0 oder 1 sind, und
n eine ganze Zahl von 1 bis 5 ist, und
(c) ein basisches Metalloxid in einer Menge von 10 bis 1000 ppm des basischen Metalloxids, bezogen auf die vereinigte Menge des thermoplastischen Harzes und der Organophosphorverbindung, wirksam zur Verbesserung der hydrolytischen Stabilität der Zusammensetzung, wobei das Metalloxid ausgewählt ist aus der Gruppe bestehend aus anorganischen Oxiden deren wässrige Lösungen oder Suspensionen einen pH von größer als 9 haben und Mischungen daraus.

2. Zusammensetzung nach Anspruch 1, **dadurch gekennzeichnet, dass** das aromatische Carbonatharz ein aromatische Polycarbonatharz oder ein aromatisches Poly(ester-carbonat)harz aufweist.

3. Zusammensetzung nach Anspruch 2, **dadurch gekennzeichnet, dass** das eine oder mehrere thermoplastische Harze weiterhin ein aromatisches Vinylpfropfcopolymer umfasst.

4. Zusammensetzung nach Anspruch 3, **dadurch gekennzeichnet, dass** das eine oder mehrere thermoplastische Harz von etwa 30 bis etwa 99 Gewichtsteile eines aromatischen Polycarbonatharzes umfasst und von etwa 1 bis etwa 70 Gewichtsteile an Acrylnitril-Butadien-Styrol-Pfropfcopolymer, bezogen auf 100 Gewichtsteile des thermoplastischen Harzes.

5. Zusammensetzung nach Anspruch 1, **dadurch gekennzeichnet, dass** die Zusammensetzung etwa 60 bis etwa 90 Gewichtsteile von einem oder mehreren thermoplastischen Harzen aufweist und von etwa 40 bis etwa 10 Gewichtsteile der Organophosphorverbindung, und von 10 bis 1000 ppm des basischen Metalloxids bezogen auf die vereinigte Menge des thermoplastischen Harzes und der Organophosphorverbindung.

6. Zusammensetzung nach Anspruch 1, **dadurch gekennzeichnet, dass** R₆, R₇, R₈ und R₉ jeweils Phenyl sind, a, b, c und d jeweils 1 sind, und X 1,3-Phenylen oder ein divalenter aromatischer Rest der Strukturformel ist:

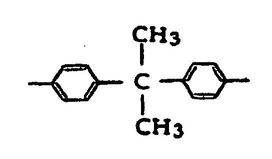

7. Zusammensetzung nach Anspruch 1, **dadurch gekennzeichnet, dass** die Organophosphorverbindung einen titrierbaren Säuregehalt von weniger als etwa 1,0 mg Kaliumhydroxid pro Gramm der Organophosphorverbindung hat.

8. Zusammensetzung nach Anspruch 6, **dadurch gekennzeichnet, dass** die Organophosphorverbindung ein Blend von Oligomeren der Organophosphorverbindung ist, die einen mittleren n Wert von größer als 1 bis weniger als 5 haben.

9. Zusammensetzung nach Anspruch 1, **dadurch gekennzeichnet, dass** das Metalloxid ausgewählt ist aus der Gruppe bestehend aus Magnesiumoxid, Calciumoxid, Bariumoxid, Strontiumoxid, Aluminiumoxid, Zinkoxid und Mischungen daraus.

10. Ein Verfahren zur Herstellung einer flammhemmenden thermoplastischen Harzzusammensetzung, bei welchem man ein oder mehrere thermoplastische Harze vereinigt, wobei das eine oder die mehreren thermoplastischen Harze wenigstens ein aromatisches Carbonatharz umfassen, eine flammhemmende Menge einer flammhemmenden Organophosphorverbindung umfassend ein oder mehrere Verbindungen gemäß der Strukturformel: 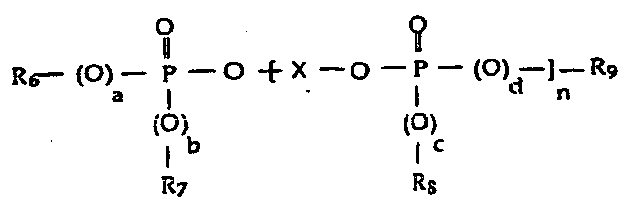 worin R₆, R₇, R₈ und R₉ jeweils unabhängig voneinander Aryl ist, gegebenenfalls substituiert (C₁-C₆)Alkyl, X Arylen ist, gegebenenfalls substituiert mit (C₁-C₆)Alkyl, a, b, c und d jeweils unabhängig 0 oder 1 ist, n eine ganze Zahl von 1 bis 5 ist, und eine Menge von 10 bis 1000 ppm des basischen Metalloxids, bezogen auf die vereinigte Menge an thermoplastischen Harzen und Organophosphorverbindungen des basischen Metalloxids wirksam zur Verbesserung der Hydrolysestabilität der Zusammensetzung, wobei das Metalloxid ausgewählt ist aus der Gruppe bestehend aus anorganischen Oxiden, deren wässrige Lösungen oder Suspensionen einen pH-Wert von größer als 9 haben und Mischungen daraus.

## Revendications

1. Composition à base de résine thermoplastique, à inflammation freinée, qui comprend :
(a) une ou plusieurs résines thermoplastiques, comprenant au moi ns une résine de carbonate aromatique,
(b) une quantité ignifugeante d'un ignifugeant organophosphoré comprenant un ou plusieurs composés de formule développée : 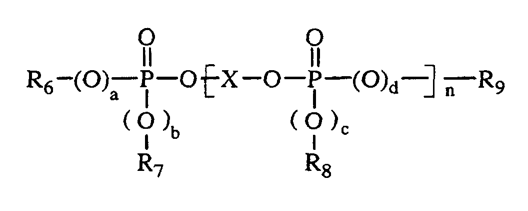 dans laquelle R₆, R₇, R₈ et R₉ représentent chacun indépendamment un groupe aryle, éventuellement substitué par un groupe alkyle en C₁ à C₆, X représente un groupe arylène, éventuellement substitué par un groupe alkyle en C₁ à C₆, a, b, c et d représentent chacun indépendamment 0 ou 1, et n désigne un nombre entier de 1 à 5, et
(c) un oxyde métallique basique, en une proportion de 10 à 1000 parties d'oxyde métallique basique par million, cette proportion étant basée sur la quantité combinée de résines thermoplastiques et de composé organophosphoré et permettant d'améliorer la stabilité de la composition vis-à-vis de l'hydrolyse, l'oxyde métallique étant choisi parmi les oxydes minéraux dont les solutions ou suspensions aqueuses ont un pH supérieur à 9, et leurs mélanges.

2. Composition selon la revendication 1, dont la résine de carbonate aromatique comprend une résine de polycarbonate aromatique ou une résine de poly(ester-carbonate) aromatique.

3. Composition selon la revendication 2, dont les résines thermoplastiques comprennent en outre un copolymère greffé aromatique vinylique.

4. Composition selon la revendication 3, dont les résines thermoplastiques comprennent d'environ 30 à environ 99 parties en poids d'une résine de polycarbonate aromatique et d'environ 1 à environ 70 parties en poids d'un copolymère greffé d'acrylonitrile-butadiène-styrène, pour 100 parties en poids de résines thermoplastiques.

5. Composition selon la revendication 1, qui comprend d'environ 60 à environ 90 parties en poids d'une ou plusieurs résines thermoplastiques et d'environ 40 à environ 10 parties en poids de composé organophosphoré, et qui contient 10 à 1000 parties d'oxyde métallique basique par million, cette proportion étant rapportée à la quantité combinée de résines thermoplastiques et de composé organophosphoré.

6. Composition selon la revendication 1, pour laquelle R₆, R₇, R₈ et R₉ représentent chacun un groupe phényle, a, b, c et d sont tous égaux à 1, et X représente un groupe 1,3-phénylène ou un groupe aromatique divalent de formule développée :

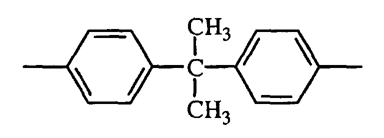

7. Composition selon la revendication 1, dont le composé organophosphoré a une teneur en acide titrable inférieure à environ 1,0 mg d'hydroxyde de potassium par gramme de composé organophosphoré.

8. Composition selon la revendication 6, dont le composé organophosphoré est un mélange de composés organophosphorés oligomères, ayant une valeur moyenne de n supérieure à 1 et inférieure à 5.

9. Composition selon la revendication 1, dont l'oxyde métallique est choisi parmi l'oxyde de magnésium, l'oxyde de calcium, l'oxyde de baryum, l'oxyde de strontium, l'oxyde d'aluminium, l'oxyde de zinc et leurs mélanges.

10. Procédé de préparation d'une composition à base de résine thermoplastique, à inflammation freinée, qui comprend la combinaison d'une ou plusieurs résines thermoplastiques, comprenant au moins une résine de carbonate aromatique, d'une quantité ignifugeante d'un ignifugeant organophosphoré comprenant un ou plusieurs composés de formule développée : 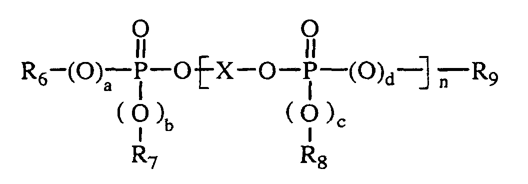 dans laquelle R₆, R₇, R₈ et R₉ représentent chacun indépendamment un groupe aryle, éventuellement substitué par un groupe alkyle en C₁ à C₆, X représente un groupe arylène, éventuellement substitué par un groupe alkyle en C₁ à C₆, a, b, c et d représentent chacun indépendamment 0 ou 1, et n désigne un nombre entier de 1 à 5, et d'une proportion de 10 à 1000 parties d'un oxyde métallique basique par million, cette proportion étant basée sur la quantité combinée de résines thermoplastiques et de composé organophosphoré et permettant d'améliorer la stabilité de la composition vis-à-vis de l'hydrolyse, l'oxyde métallique étant choisi parmi les oxydes minéraux dont les solutions ou suspensions aqueuses ont un pH supérieur à 9, et leurs mélanges.
